# EUROPEAN PATENT APPLICATION

(11) **EP 4 574 918 A1**
(43) Date of publication of application: **25.06.2025**
(21) Application number: 23854194.0
(22) Date of filing: 24.07.2023
(51) Int. Cl.: C09K 3/00, A41D 13/015, F41H 1/02

(54) **ULTRAHIGH-CONCENTRATION SHEAR THICKENING FLUID, PREPARATION METHOD THEREFOR, AND USE THEREOF**

(30) Priority: 19.08.2022 CN 202210997316
(71) Applicant: Zhongshan Laipu New Materials Co., Ltd, Zhongshan, Guangdong 528400 (CN)
(72) Inventor: ZHANG, Gannian, Zhongshan, Guangdong 528400 (CN); SHI, Zhengbing, Zhongshan, Guangdong 528400 (CN)
(74) Representative: von Tietzen und Hennig, Nikolaus
(86) International application number: PCT/CN2023/108862
(87) International publication number: WO 2024/037289

(57) **Abstract**

Disclosed are an ultrahigh-concentration shear thickening fluid, a preparation method therefor, and a use thereof. The fluid is composed of nanoparticles and a solvent, the volume fraction of the nanoparticles in the fluid is 0.63-0.65, and the solvent is liquid polyhydric alcohol. The nanoparticles are pre-mixed and then are subjected to strong shear dispersion until a "Tyndall effect" appears, then a high-circulation instrument is used for further mixing uniformly such that the fluid has good uniformity, and finally drying is performed until the total content of small molecule alcohol impurities is not more than 3.5 wt%. The shear thickening fluid of the present invention has a concentration of 0.63 to 0.65, has a greater thickening amplitude (the ratio of the highest concentration to the lowest concentration is more than 1000 times at most) than that of discontinuous shear thickening of all existing fluids, has a better impact energy absorption effect, and has more significant improvement on the impact resistance of products to which the shear thickening fluid is applied.

## Description

### Technical Field

The present invention relates to an ultrahigh-concentration shear thickening fluid, a preparation method therefor, and a use thereof, and belongs to the field of nanofluid material technology.

### Description of Related Art

Shear thickening fluid is a particle suspension that changes its own concentration with external forces and is composed of nanoparticles and solvent. When an external force acts on the fluid, the particles aggregate to form particle clusters, and the fluid viscosity increases exponentially with the formation of particle clusters. When the external force is removed, the particle clusters dissociate, the particles return to the dispersed suspended state, and the fluid viscosity also decreases to an equilibrium state. This feature enables the fluid to absorb impact and makes it have potential application market in many fields such as stab resistance, bullet resistance, and impact resistance.

The ability of the fluid to absorb impact increases abruptly with the increase of the volume fraction φ (i.e., concentration) of nanoparticles in the fluid. The highest concentration of fluid reported in the literature is φ=0.62, while the concentrations of nanoparticles in other published shear thickening fluids are mainly concentrated in the range of 0.46 to 0.62, and there have been no reports of ultrahigh-concentration shear thickening fluids with φ≥0.63 for the time being.

The difficulty in preparing an ultrahigh-concentration shear thickening fluid lies in dispersing agglomerated nanoparticles. The preparation techniques of the related art mainly involve vortex oscillation, low-speed ball milling, and ultrasonic dispersion. When preparing low to medium concentration fluids, these preparation techniques can effectively disperse agglomerated nanoparticles, resulting in fluids with good shear thickening properties. However, when the fluid concentration rises to 0.63 or higher, these techniques of the related art cannot effectively disperse agglomerated particles, as such, the prepared fluid does not have discontinuous shear thickening properties. Therefore, it is necessary to invent a preparation process to effectively disperse agglomerated nanoparticles and prepare shear thickening fluids with concentrations of 0.63 or greater.

### SUMMARY

The objective of the present invention is to overcome the deficiencies in the related art and provide an ultrahigh-concentration shear thickening fluid with a fluid concentration that is able to reach 0.63 to 0.65, this fluid features stable discontinuous shear thickening properties, and the thickening amplitude (the ratio of the highest concentration to the lowest concentration) can exceed 1000 times at maximum.

Another objective of the present invention is to provide a preparation method for the ultrahigh-concentration shear thickening fluid.

The third objective of the present invention is to provide a use of the ultrahigh-concentration shear thickening fluid.

The present invention is achieved through the following technical solutions:

An ultrahigh-concentration shear thickening fluid composed of nanoparticles and a solvent is characterized in that a volume fraction of the nanoparticles in the fluid is 0.63 to 0.65, and the solvent is liquid polyhydric alcohol.

In the present invention, a particle size of the nanoparticles is 250 nm to 900 nm, and the particle size has monodispersity. The nanoparticles are inorganic compounds, such as silicon dioxide or calcium carbonate.

An ultrahigh-concentration shear thickening fluid is characterized in that the following steps are included:
a. Pre-mixing: Nanoparticles are slowly added into a solvent and are stirred slowly until no lumps are visible to the naked eye, and a pre-mixed liquid is obtained.
b. Shear dispersion: The particles in the pre-mixed liquid are strongly sheared and dispersed until the "Tyndall effect" is observed in the fluid under irradiation of a laser pen, and an initial fluid is obtained.
c. Mixing: The initial fluid is further mixed with a high-circulation instrument, and a fluid with good uniformity is obtained.
d. Drying: The fluid is dried until a total content of water and small molecule alcohol impurities in the fluid does not exceed 3.5 wt%, and a discontinuous shear thickening fluid is obtained.

In the preparation method of the present invention, the dried fluid is able to be mixed again by repeating step c to improve the overall uniformity of the fluid. The state of the fluid during flowing shall be a uniform substance without local stratification phenomena.

In the present invention, the instrument for strong shearing dispersion used for shear dispersion is a ball mill, a bead mill, or a three-roller rolling mill.

In the present invention, the high-circulation instrument is a vortex oscillator or a bottle rolling machine.

A use of the ultrahigh-concentration shear thickening fluid is able to be applied to composite stab-resistant materials or impact protection bodies.

Compared to the related art, the present invention has the following advantages.

The shear thickening fluid of the present invention has a concentration of 0.63 to 0.65, has a greater thickening amplitude (the ratio of the highest concentration to the lowest concentration is more than 1000 times at most) than that of discontinuous shear thickening of all existing fluids, has a better impact energy absorption effect, and has more significant improvement on the impact resistance of products to which the shear thickening fluid is applied.

After the nano particles are pre-mixed, all agglomerated nanoparticle clusters are broken up by a strong shear stress, and then the fluid uniformity is improved by a mixing device. Finally, the mass fraction of water and small molecule alcohol impurities in the fluid is further controlled by drying to improve the effect of the fluid absorbing energy. The preparation method of the present invention is simple, but a stable shear thickening fluid with a fluid concentration of 0.63-0.65 can be obtained. The characteristics of increased viscosity and improved energy absorption effect of the fluid are ensured, and a broader range for the application of shear thickening fluids are expanded.

### BRIEF DESCRIPTION OF THE DRAWINGS

FIG. 1 is a graph of a relationship of viscosity change with shear rate for shear thickening fluids of different concentrations obtained by dispersing silicon dioxide spheres with a particle size of 520±49 nm in polyethylene glycol with a relative molecular mass of 200 in Embodiment 1.
FIG. 2A is a graph of a relationship of viscosity change with shear rate for fluids prepared in Embodiment 2-1 and Embodiment 2-2, where the hollow circle curve represents a fluid 2-1, and the solid square curve represents a fluid 2-2.
FIG. 2B is a graph of a relationship of viscosity change with shear stress for the fluids prepared in Embodiment 2-1 and Embodiment 2-2, where the hollow circle curve represents the fluid 2-1, and the solid square curve represents the fluid 2-2.
FIG. 3 is a graph of a log-log curve of a relationship of viscosity change with shear stress for a fluid prepared in Embodiment 4.
FIG. 4 is a graph of a relationship of viscosity change with shear rate for a fluid prepared in Embodiment 5.
FIG. 5 is a graph of a relationship between viscosity and a change in shear rate for a fluid prepared in Embodiment 6.
FIG. 6 is a graph of a relationship of viscosity change with shear rate for a fluid prepared in Embodiment 7.

### DESCRIPTION OF THE EMBODIMENTS

An ultrahigh-concentration shear thickening fluid is composed of nanoparticles and a solvent, with a fluid concentration of 0.63 to 0.65. A preparation method for the fluid includes the following steps:
a. Preparation of a pre-mixed solution: Nanoparticles are slowly added to a solvent and stirred slowly to prevent formation of lumps visible to the naked eye, and a premixed solution is obtained.
b. Shear dispersion: The premixed liquid is treated by strong shear dispersion to obtain an initial fluid, and under the irradiation of a laser pen, the initial fluid shall exhibit a good Tyndall effect.
c. Mixing: A high-circulation instrument is used to further mix the initial fluid, and a fluid with good uniformity and no local stratification during flow is obtained.
d. Drying: The fluid is dried until a total content of water and small molecule alcohol impurities in the fluid does not exceed 2.5 wt%, and then a discontinuous shear thickening fluid is obtained.
e. Re-mixing: The high-circulation instrument is used again to remix the dried fluid for a period of time to ensure that the fluid has good uniformity.

Herein, the nanoparticles may be nano-silica spheres or nano-calcium carbonate particles, and the solvent may be a liquid polyol, such as ethylene glycol, polyethylene glycol 100, polyethylene glycol 200, polyethylene glycol 300, or polyethylene glycol 400. A particle size of the nanoparticles is 250 nm to 900 nm with monodispersity, and the difference between a maximum particle size and a minimum particle size does not exceed 40%.

The following detailed description of the present invention is provided in combination with specific embodiments. Unless otherwise specified, all percentages mentioned in the following paragraphs are percentages:

### Embodiment 1:

Material:
nanoparticles: nano silicon dioxide spheres with a particle size of 520±49nm, and
a solvent: polyethylene glycol with a molecular weight of 200.

Objective: to prepare shear thickening fluids with fluid concentrations of 0.62, 0.63, and 0.64, hereinafter referred to as a fluid 1-1, a fluid 1-2, and a fluid 1-3.

The preparation method is as follows:
a. Pre-mixing: Silica spheres are slowly added to polyethylene glycol in batches and slowly stirred until each batch of silica spheres added does not form lumps visible to the naked eye, and a pre-mixed liquid is obtained.
b. Shear dispersion: A high-energy planetary ball mill is used, dispersion is performed for 16 to 18 hours at a rotation speed of 800 RPM and a mass ratio of grinding beads to the premixed liquid of 2:1, and an initial fluid is obtained.
c. Mixing: A vortex oscillator is used to mix the initial fluid for no less than 48 hours, so that the fluid does not produce "stratification and disconnection" due to local uneven viscosity when flowing, and a fluid with excellent uniformity is obtained.
d. Drying: A vacuum drying oven is used to dry the fluid at a vacuum degree of -0.1 MPa and a temperature of 85°C until a total content of water and small molecule alcohol impurities in the fluid does not exceed 2.5wt%, and a discontinuous shear thickening fluid is obtained.
e. Re-mix: The vortex oscillator can be used again to mix the dried fluid for 3 to 5 hours to ensure the uniformity of the fluid.

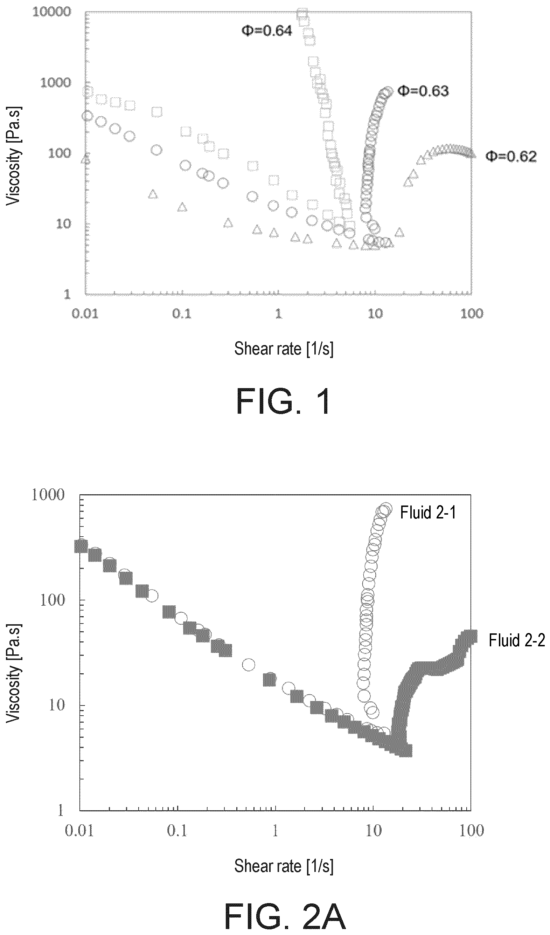

A rheometer (MCR302, Anton Paar) is used to characterize a relationship of fluid viscosity change with shear rate for fluids with φ=0.62 (fluid 1-1), φ=0.63 (fluid 1-2), and φ=0.64 (fluid 1-3) prepared in Embodiment 1. A cone-plate testing system with a cone angle of 2° and a diameter of 25mm is used for testing. Prior to testing, a "pre-shear" treatment is performed, slowly increasing the stress from 0.3Pa to 300Pa over 5 minutes, then slowly decreasing it back to 0.3Pa over the same time period, so that any non-uniformity introduced during sample loading is eliminated. To better characterize the viscosity change trend of the fluid under high shear stress, the rheometer's "control stress" mode is used to scan a shear stress range of 10⁻² Pa to 10⁴ Pa, and the results are presented in the form of "viscosity vs shear rate" as shown in FIG. 1.

When φ=0.62, a concentration of the fluid 1-1 reaches a highest reported value, and at a shear rate of approximately 12s⁻¹, the fluid viscosity jumps from 4 Pa.s to a maximum value of 150 Pa.s, with an increase of approximately 37.5 times (150/4=37.5). When φ=0.63, a concentration increase of the fluid 1-2 is more significant, rising from a minimum of 4 Pa.s to approximately 1000Pa.s, with an increase of approximately 250 times. When φ=0.64, the fluid 1-3 increases from a minimum of 8 Pa.s to 10000 Pa.s, with an increase of about 1250 times. Therefore, for every 1% increase in volume fraction, the increase in fluid concentration increases significantly, indicating that the fluids with φ≥0.63 can absorb impact energy better than all existing fluids, and impact resistance performance of a product is thus significantly improved.

### Embodiment 2-1:

According to the preparation method of Embodiment 1, silicon dioxide spheres with a particle size of 520±49nm and polyethylene glycol with a relative molecular mass of 200 are used to prepare a fluid 2-1 with cp≈0.63.

### Embodiment 2-2:

According to the preparation method of Embodiment 1, step c is omitted, and silicon dioxide spheres with a particle size of 520±49nm and polyethylene glycol with a relative molecular mass of 200 are used to prepare a fluid 2-2 with φ≈0.63.

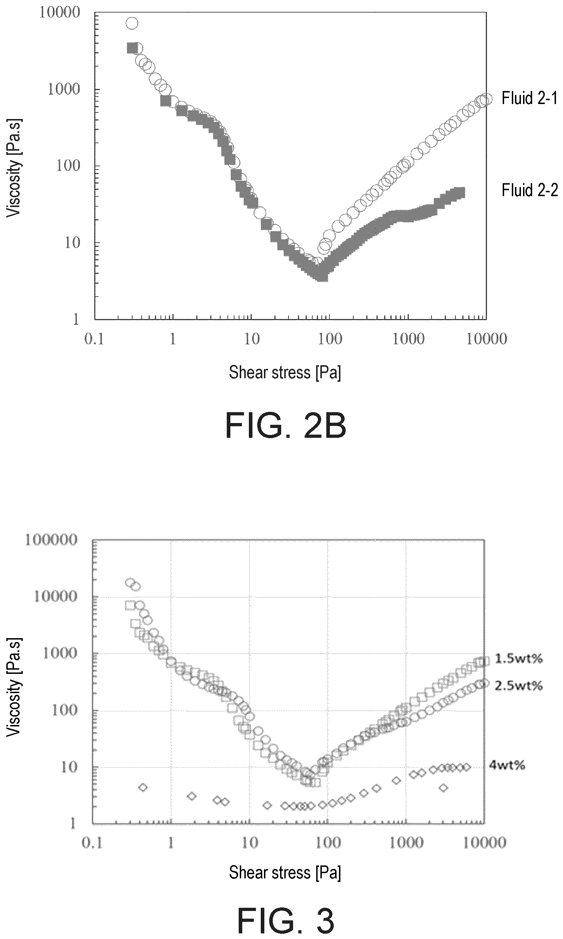

According to the testing method in Embodiment 1, a relationship of viscosity change with shear rate as well as a relationship of viscosity change with shear stress are tested and analyzed for the fluid 2-1 and fluid 2-2. The characteristic rheological performance graphs are obtained, as shown in FIG. 2A and FIG. 2B. As shown by the hollow circle curve in FIG. 2A, the fluid 2-1 prepared according to the preparation method of the present invention begins to thicken at a shear rate of 15s⁻¹, with viscosity subsequently rising linearly and the shear rate being limited to around 15s⁻¹, resulting in a concentration increase of approximately 500 times. In FIG. 2B, as the shear stress increases, the viscosity of the fluid 2-1 rises linearly, with a slope of the viscosity increase in the viscosity vs. shear stress graph being approximately 1, exhibiting typical discontinuous shear thickening characteristics. In contrast, the fluid 2-2 (solid square curves in FIG. 2A and 2B), which has the same concentration but lacks step c in its preparation, shows only a 10-fold increase in viscosity, and in FIG. 2B, the slope of the viscosity increase is less than 1, lacking the property of discontinuous shear thickening.

### Embodiment 3:

According to the preparation method of Embodiment 1, step b is omitted, and silicon dioxide spheres with a particle size of 400±34 nm and polyethylene glycol with a relative molecular mass of 200 are used to prepare a fluid 3-1 with φ≈0.63.

After 24 hours, due to the precipitation of silicon dioxide spheres in the fluid 3-1, the fluid fails to reach a stable state suitable for testing its rheological properties.

### Embodiment 4:

Silicon dioxide spheres with a particle size of 350±62 nm and polyethylene glycol with a relative molecular mass of 200 are used as raw materials, following the preparation method of Embodiment 1, and indicators in step d are controlled, a fluid 4-1 with φ≈0.63 and a total content of water and small molecule alcohol impurities not exceeding 4wt%, a fluid 4-2 with φ≈0.63 and a total content of water and small molecule alcohol impurities not exceeding 2.5wt%, and a fluid 4-3 with φ≈0.63 and a total content of water and small molecule alcohol impurities not exceeding 1.5wt% are prepared. According to the testing method in Embodiment 1, log-log graphs of viscosity change with shear stress for the fluid 4-1, the fluid 4-2, and the fluid 4-3 are obtained, as shown in FIG. 3.

When the shear stress produced by an external impact on a shear thickening fluid exceeds a critical value, the nanoparticles in the fluid instantly aggregate to form particle clusters to absorb or dissipate the impact energy. The greater the shear stress, the more particle clusters form in the fluid, resulting in better energy absorption and higher fluid viscosity. Numerous theoretical models indicate that under ideal conditions, viscosity changes exponentially with shear stress. In a log-log graph of viscosity versus shear stress, the increase in viscosity with shear stress shall form a straight line, and the closer the slope is to 1, the more the fluid exhibits discontinuous shear thickening characteristics, and the higher the energy absorption efficiency per unit volume of the fluid.

As shown in FIG. 3 for Embodiment 4, regarding the fluid 4-1, the fluid 4-2, the fluid and 4-3, when the mass fraction of impurities such as water and small molecule alcohols in the fluid is within 1.5 wt% to 2.5 wt%, the slope of the viscosity increase is very close to 1, indicating that the fluid has discontinuous shear thickening characteristics and the energy absorption effect per unit volume of the fluid is good. However, when the mass fraction of impurities reaches 4 wt%, the increase in viscosity with shear stress is very small, indicating that the fluid has lost its discontinuous shear thickening characteristics, and the fluid only has a very weak energy absorption property per unit volume. When the mass fraction of impurities continues to increase, the fluid may completely lose its energy absorption properties. Therefore, the total mass of impurities such as water and small molecule alcohols in the fluid plays a decisive role in whether the fluid has discontinuous shear thickening characteristics and whether the fluid can absorb energy well per unit volume.

Moreover, because water and small molecule alcohols have higher polarity than polyhydric alcohols, once the content of water and small molecule alcohols exceeds the critical value of 4wt%, the stability of nano silicon dioxide spheres in the polyhydric alcohol is disrupted, causing the silicon spheres to precipitate and settle out, resulting in the fluid losing its discontinuous shear thickening characteristics.

### Embodiment 5:

A small amount of purchased silicon dioxide nanoparticles is used and dispersed in deionized water by oscillation. A nanoparticle size analyzer (model Malvern ZetaSizer Nano-S) is used for dynamic light scattering (DLS) testing, the particle size of the silicon dioxide particles is determined to be 273nm with a 10% particle size difference. The particle size measured through electron microscope images is 268±22nm, which is basically consistent with the DLS test results. Therefore, it can be confirmed that the particle size of the silicon dioxide is 273nm with a 10% particle size difference.

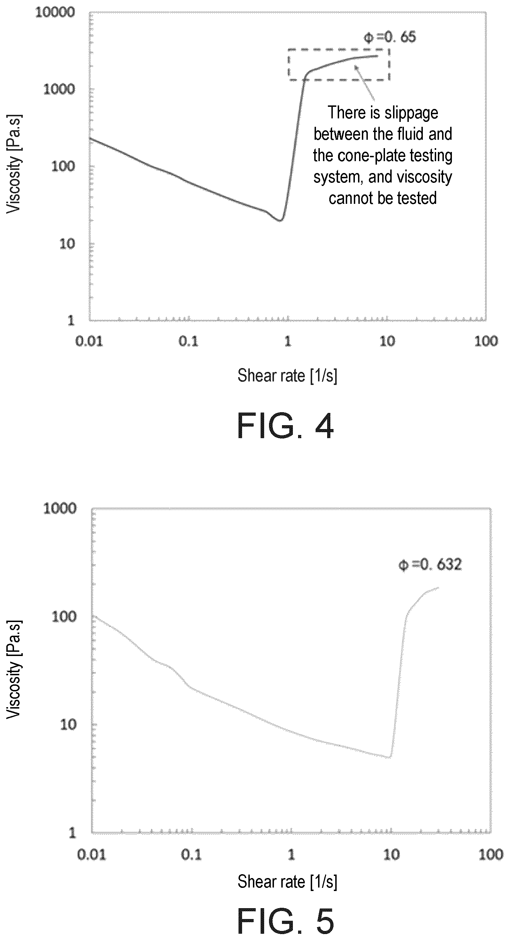

According to the preparation method in Embodiment 1, the nano silicon dioxide particles are dispersed in polyethylene glycol with a relative molecular mass of 100, and a shear thickening fluid with a volume fraction of 0.65 is obtained. The rheological properties of the fluid are characterized by scanning shear stress from 10⁻² to 10³ using the control stress mode of a rheometer (Anton Paar MCR302), and the results are shown in FIG. 4. From the curve of viscosity change with shear rate, it can be seen that the viscosity increases abruptly when the shear rate is approximately 1s⁻¹, exhibiting characteristics of discontinuous shear thickening. After the fluid's viscosity rises to 2000Pa.s, as the shear rate increases, the fluid's viscosity enters a steady value, maintaining around 3000Pa.s. This does not mean that the fluid's viscosity has reached its maximum value, but rather that the excessive thickening of the fluid due to its high viscosity has caused slippage with the cone-plate testing system, and the rheometer is thus prevented from measuring the highest viscosity value of the fluid.

### Embodiment 6:

According to the method in Embodiment 5, the particle size of the purchased nano silicon dioxide is measured and confirmed to be 556 nm, with a particle size difference of approximately 8%.

According to the method in Embodiment 1, the nano silicon dioxide particles are dispersed in polyethylene glycol with a relative molecular mass of 200, and a shear thickening fluid with a particle volume fraction of 0.632 is obtained. According to the method of Embodiment 5, the rheological properties of the fluid are tested, as shown in FIG. 5. From FIG. 5, it can be seen that the fluid has discontinuous shear thickening characteristics.

### Embodiment 7:

According to the method in Embodiment 5, the particle size of the purchased calcium carbonate particles is measured and confirmed to be 853 nm, with a particle size difference of approximately 25%.

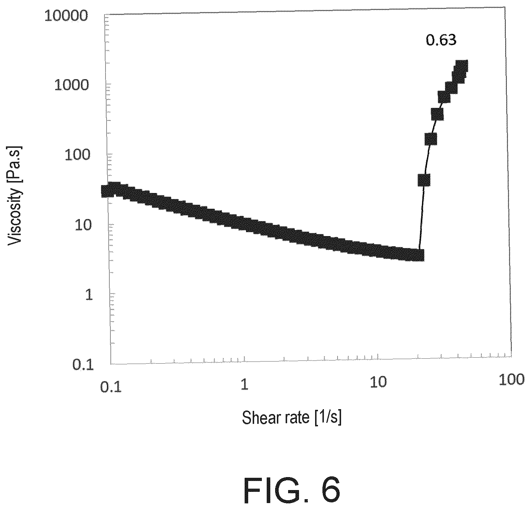

According to the method in Embodiment 1, these calcium carbonate particles are dispersed in polyethylene glycol with a relative molecular mass of 200, and a shear thickening fluid with a volume fraction of 0.63 is obtained. According to the method of Embodiment 5, the rheological properties of the fluid are tested, as shown in FIG. 6. From FIG. 6, it can be seen that the fluid has discontinuous shear thickening characteristics.

## Claims

1. An ultrahigh-concentration shear thickening fluid, composed of nanoparticles and a solvent, **characterized in that** a volume fraction of the nanoparticles in the fluid is 0.63 to 0.65, and the solvent is liquid polyhydric alcohol.

2. The ultrahigh-concentration shear thickening fluid according to claim 1, **characterized in that** a particle size of the nanoparticles is 250 nm to 900 nm, and the particle size has monodispersity.

3. The ultrahigh-concentration shear thickening fluid according to claim 1, **characterized in that** the nanoparticles are selected from inorganic compounds, being silicon dioxide or calcium carbonate.

4. A preparation method for the ultrahigh-concentration shear thickening fluid according to claim 1, **characterized by** comprising the following steps:
a. pre-mixing: slowly adding the nanoparticles into the solvent, performing stirring slowly until no lumps are visible to naked eye, and obtaining a pre-mixed liquid;
b. shear dispersion: strongly shearing and dispersing particles in the pre-mixed liquid to form an initial fluid, wherein the initial fluid has a visible "Tyndall effect" under a irradiation of a laser pen;
c. mixing: further mixing the initial fluid with a high-circulation instrument and obtaining a fluid with good uniformity; and
d. drying: drying the fluid until a total content of water and small molecule alcohol impurities in the fluid does not exceed 3.5 wt% and then obtaining a discontinuous shear thickening fluid.

5. The preparation method for the ultrahigh-concentration shear thickening fluid according to claim 4, **characterized in that** the dried fluid is able to be mixed again by repeating the step c to improve the overall uniformity of the fluid.

6. The preparation method for the ultrahigh-concentration shear thickening fluid according to claim 4, **characterized in that** an instrument for strong shearing in the step b is a ball mill, a bead mill, or a three-roller rolling mill.

7. The preparation method for the ultrahigh-concentration shear thickening fluid according to claim 4, **characterized in that** the high-circulation instrument is a vortex oscillator or a bottle rolling machine.

8. A use of the ultrahigh-concentration shear thickening fluid according to claim 1.

9. A use of the ultrahigh-concentration shear thickening fluid according to claim 8, **characterized in** being used in composite stab-resistant materials or impact protection bodies.
